# EUROPEAN PATENT SPECIFICATION

(11) **EP 1 565 846 B1**
(45) Date of publication and mention of the grant of the patent: **18.03.2009**
(21) Application number: 03811793.3
(22) Date of filing: 04.11.2003
(51) Int. Cl.: G06F 17/30

(54) **INFORMATION STORAGE AND RETRIEVAL**
SPEICHERN UND ABRUFEN VON INFORMATIONEN
STOCKAGE ET EXTRACTION D'INFORMATIONS

(30) Priority: 27.11.2002 GB 0227659
(43) Date of publication of application: 24.08.2005
(73) Proprietor: SONY UNITED KINGDOM LIMITED, Weybridge KT13 0XW (GB)
(72) Inventor: TREPESS, David, William, Basingstoke, Hampshire RG21 5NP (GB); THORPE, Jonathan, Richard, Winchester, Hampshire SO22 4QF (GB)
(74) Representative: DeVile, Jonathan Mark
(86) International application number: PCT/GB2003/004758
(87) International publication number: WO 2004/049206

(56) References cited:
- EP-A- 1 400 902
- EP-A- 1 400 903
- WO-A-01/75640
- WO-A-02/27508
- US-A- 5 847 708
- KOHONEN T ET AL: "Self Organization of a Massive Document Collection" IEEE TRANSACTIONS ON NEURAL NETWORKS, IEEE INC, NEW YORK, US, vol. 11, no. 3, May 2000 (2000-05), pages 574-585, XP002259639 ISSN: 1045-9227 cited in the application
- LIN X ET AL ASSOCIATION FOR COMPUTING MACHINERY: "A self-organizing semantic map for information retrieval" PROCEEDINGS OF THE ANNUAL INTERNATIONAL ACM/SIGIR CONFERENCE ON RESEARCH AND DEVELOPMENT IN INFORMATION RETRIEVAL. CHICAGO, OCT. 13 - 16, 1991, PROCEEDINGS OF THE ANNUAL INTERNATIONAL ACM/SIGIR CONFERENCE ON RESEARCH AND DEEVELOPMENT IN INFORMATION R, vol. CONF. 14, 13 October 1991 (1991-10-13), pages 262-269, XP002259641
- KOHONEN T ED - MEECH J A ET AL: "Analysis of processes and large data sets by a self-organizing method" INTELLIGENT PROCESSING AND MANUFACTURING OF MATERIALS, 1999. IPMM '99. PROCEEDINGS OF THE SECOND INTERNATIONAL CONFERENCE ON HONOLULU, HI, USA 10-15 JULY 1999, PISCATAWAY, NJ, USA,IEEE, US, 10 July 1999 (1999-07-10), pages 27-36, XP010351611 ISBN: 0-7803-5489-3

## Description

### Field of the Invention

This invention relates to information retrieval apparatus and methods.

### Background of the Invention

There are many established systems for locating information (e.g. documents, images, emails, patents, internet content or media content such as audio/video content) by searching under keywords. Examples include internet search "engines" such as those provided by "Google" ^{™} or "Yahoo" ^{™} where a search carried out by keyword leads to a list of results which are ranked by the search engine, in order of perceived relevance.

However, in a system encompassing a large amount of content, often referred to as a massive content collection, it can be difficult to formulate effective search queries to give a relatively short list of search "hits". For example, at the time of preparing the present application, a Google search on the keywords "massive document collection" drew 243000 hits. This number of hits would be expected to grow if the search were repeated later, as the amount of content stored across the internet generally increases with time. Reviewing such a list of hits can be prohibitively time-consuming.

In general, some reasons why massive content collections are not well utilised are:
- a user doesn't know that relevant content exists
- a user knows that relevant content exists but does not know where it can be located
- a user knows that content exists but does not know it is relevant
- a user knows that relevant content exists and how to find it, but finding the content takes a long time

The paper "Self Organisation of a Massive Document Collection", Kohonen et al, IEEE Transactions on Neural Networks, Vol 11, No. 3, May 2000, pages 574-585 discloses a technique using so-called "self-organising maps" (SOMs). These make use of so-called unsupervised self-learning neural network algorithms in which "feature vectors" representing properties of each document are mapped onto nodes of a SOM.

In the Kohonen et al paper, a first step is to pre-process the document text, and then a feature vector is derived from each pre-processed document. In one form, this may be a histogram showing the frequencies of occurrence of each of a large dictionary of words. Each data value (i.e. each frequency of occurrence of a respective dictionary word) in the histogram becomes a value in an n-value vector, where n is the total number of candidate words in the dictionary (43222 in the example described in this paper). Weighting may be applied to the n vector values, perhaps to stress the increased relevance or improved differentiation of certain words.

The n-value vectors are then mapped onto smaller dimensional vectors (i.e. vectors having a number of values m (500 in the example in the paper) which is substantially less than n. This is achieved by multiplying the vector by an (n x m) projection matrix" formed of an array of random numbers. This technique has been shown to generate vectors of smaller dimension where any two reduced-dimension vector have much the same vector dot product as the two respective input vectors. This vector mapping process is described in the paper "Dimensionality Reduction by Random Mapping: Fast Similarity Computation for Clustering", Kaski, Proc IJCNN, pages 413-418,1998.

The reduced dimension vectors are then mapped onto nodes (otherwise called neurons) on the SOM by a process of multiplying each vector by a "model" (another vector). The models are produced by a learning process which automatically orders them by mutual similarity onto the SOM, which is generally represented as a two-dimensional grid of nodes. This is a non-trivial process which took Kohonen et al six weeks on a six-processor computer having 800 MB of memory, for a document database of just under seven million documents. Finally the grid of nodes forming the SOM is displayed, with the user being able to zoom into regions of the map and select a node, which causes the user interface to offer a link to an internet page containing the document linked to that node.

In an article entitled "A Self-Organising Semantic Map For Information Retrieval" by Xia Lin et al, published in the Association for Computing Machining, Proceedings of the Annual International ACM/SIGIR Conference on Research and Development in Information Retrieval, Chicago, October 13-16 1991, pages 262-269, XP002259641, there is disclosed an information retrieval apparatus in which Kohonen's self-organising semantic map is arranged to visualise a semantic relationship between the input documents. The semantic map provides a facility for an online bibliographic system.

In WO 01/75640 there is discloses a search engine which is arranged to analyse files satisfying a query from the user and organise the files in a logical fashion that allows the user to focus on the files in which the user is most interested. To organise the files, the search engine groups the files into clusters according to the one or more phrases in the files which satisfy the query. The search engine groups the files into clusters according to the phrases found in the files as well as the servers hosting the files. The search engine then displays a graphical representation of the clusters for the user.

In an article entitled "Analysis of processes and large data sets by a self-organising method" by Kohonen T, published in Intelligent Processing and Manufacturing of Materials, 1999, IPMM '99, Proceedings of the Second International Conference on Honolulu, HI, USA 10-15 July 1999, pages 27-36, XP01035151611, there is disclosed a further application of a self-organising map to large data sets in which collective interaction allows a large data space to be spanned in a non-linear way, and allows the data space to be projected on to a visual display.

WHO 02/27508 discloses a method of graphically displaying a result set according to the qualitative attributes of the results set. Data items are stored in a database and searched. A co-ordinate graphical display is generated on each end user's display device to present the searched data items. The graphical display uses the spatial relationships among the data item representations to represent relationships among the data items.

### Summary of the Invention

Various aspects and features of the present invention are defined in the appended claims.

According to the present invention there is provided an information retrieval apparatus for searching a set of information items and displaying the results of the search using a self-organising map, the information items each having a set of characterising information features which include at least one of metadata describing the content or attributes of the information item, data representative of video images or data representative of audio signals, at least one of the characterising information features for each information item being used to form a feature vector, the features vectors being used to train the self-organising map to the effect that a feature vector of an information item when applied to an input of the self-organising map identifies one of a plurality of output nodes, the output nodes being arranged to identify points within the self-organising map, the apparatus comprising
a search processor operable
to generate a user defined feature vector from at least one of the characterising information features defined by a user,
to search the set of information items by applying the user defined feature vector to the input of the self-organising map to identify information items having characterising information features corresponding to that of the user defined characterising information feature,
a graphical user interface for displaying a representation of at least some of the information items identified by the search processor, and
a user control providing a facility for selecting a video frame associated with an information item and/or audio data associated with an information item to form a search query, and the search processor is operable to search the set of information; items by forming the user defined feature vector from the search query and applying the user defined feature vector to the self organising map to identify information items corresponding to the selected video frame and/or the audio data, wherein the user control is operable to provide a user with a facility for selecting a plurality of video image frames from identified information items to form the search query and to specify a search relationship between the selected video frames in accordance with OR AND or NOT Boolean logical operators, and the set of information items searched each include a representative key stamp of video data formed by identifying a plurality of representative video frames of the information item, forming a colour histogram of each of the selected video frames, combining the histograms of each of the representative video frames by averaging the values in each of the columns of the histograms and normalising the combined histogram in order to select the representative key stamp as the video frame image having a colour histogram which has the smallest distance to the normalised combined histogram.

As such, in some examples the user is provided with a facility for refining a search by identifying desired information items with respect to items revealed as positions within the array which are mutually similar. In combination with the arrangement of the information items with respect to the positions in the array, which are displayable to a user, a facility for searching and refining the results of the search is provided. Furthermore, navigation of information items is facilitated, which is particularly advantageous when the amount of information items is large.

The present invention addresses a technical problem of defining a search query for searching information items and for refining a search for information items, which particularly advantageous for searching a navigating large amounts of data.

The characterising information features may include metadata describing the content or attributes of the information items, video images or audio signals or audio metadata, or a combination of these types of characterising information features. As such, in order to refine the search of information items, the user control may be operable to select the identified information item in accordance with metadata, video images or audio metadata associated with the identified item.

The search processor may be operable to search the set of information items for information items including the same and/or similar metadata, the same and/or a similar video image, or the same and/or similar audio metadata. For example, the search processor may compare a feature vector formed from the metadata associated with a selected information items, to find the position in the array which is closest to this feature vector. The search processor is then operable to search the set of information items in relation to the metadata associated with the user selected identified information item. The search processor identifies information items from the set, which are within a predetermined number of positions within the array from the position in the array which is closest to the feature vector.

The user control may be operable to provide a user with a facility for selecting a plurality of identified information items and to specify a search relationship between the identified items in accordance with Boolean logic. As a result, a plurality of characterising features may be combined to form a search query in accordance with the Boolean operators specified the user. As such a more focused search can be performed, which is directed to the information item, which is of interest to a user.

According to another aspect of the invention there is provided a graphical user interface for use with the information retrieval apparatus according to the embodiment described above, comprising rows of fields for selecting information items from a set of information items. Each row defines a search condition for forming a search query, in accordance with a different type of characterising information feature associated with each row. Ifmore than one information feature is provided in each row, then the conditions for the search are specified by Boolean operators. Accordingly a user may specify a search query in accordance with the information items elected in different rows of the interface.

Further respective aspects and features of the invention are defined in the appended claims.

### Brief Description of the Drawings

Embodiments of the invention will now be described, by way of example only, with reference to the accompanying drawings in which:
Figure 1 schematically illustrates an information storage and retrieval system;
Figure 2 is a schematic flow chart showing the generation of a self-organising map (SOM);
Figures 3a and 3b schematically illustrate term frequency histograms;
Figure 4a schematically illustrates a raw feature vector;
Figure 4b schematically illustrates a reduced feature vector;
Figure 5 schematically illustrates an SOM;
Figure 6 schematically illustrates a dither process;
Figures 7 to 9 schematically illustrate display screens providing a user interface to access information represented by the SOM;
Figure 10 provides a schematic block diagram of an information retrieval apparatus according to an embodiment of the invention;
Figure 11 provides an illustrative representation of a part flow diagram representing a process of generating a hierarchical arrangement of information items identified in a search;
Figure 12 provides a schematic representation of a screen providing two areas for displaying different levels of the hierarchy shown in Figure 11;
Figure 13 provides an illustrative representation of three types of characterising information features for an example information item;
Figure 14 provides a schematic illustration of a graphical user interface for forming a search query according to an example embodiment of the invention;
Figure 15 provides a schematic illustration of the forming a composite feature vector in accordance with a Boolean AND operation;
Figure 16 illustrates a combination of two feature vectors in accordance with a Boolean OR operator and a third feature vector in accordance with a Boolean NOT operator;
Figure 17 schematically illustrates a part of the two-dimensional map of identified information items showing the results of a search in accordance with the Boolean operators and feature vectors of Figure 16; and
Figure 18(a) and 18(b) provide illustrative bar graphs providing two examples of colour histograms for two video images forming a search query, and Figure 18(c) provides an illustrative bar graph produced by combining the colour histograms of Figures 18(a) and 18(b).

### Description of Example Embodiments

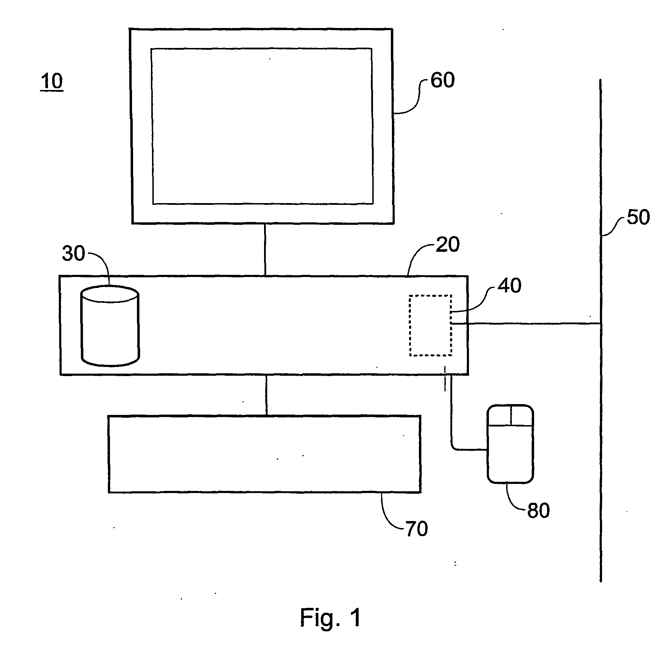

Figure 1 is a schematic diagram of an information storage and retrieval system based around a general-purpose computer 10 having a processor unit 20 including disk storage 30 for programs and data, a network interface card 40 connected to a network 50 such as an Ethernet network or the Internet, a display device such as a cathode ray tube device 60, a keyboard 70 and a user input device such as a mouse 80. The system operates under program control, the programs being stored on the disk storage 30 and provided, for example, by the network 50, a removable disk (not shown) or a pre-installation on the disk storage 30.

The storage system operates in two general modes of operation. In a first mode, a set of information items (e.g. textual information items) is assembled on the disk storage 30 or on a network disk drive connected via the network 50 and is sorted and indexed ready for a searching operation. The second mode of operation is the actual searching against the indexed and sorted data.

The embodiments are applicable to many types of information items. A non-exhaustive list of appropriate types of information includes patents, video material, emails, presentations, internet content, broadcast content, business reports, audio material, graphics and clipart, photographs and the like, or combinations or mixtures of any of these. In the present description, reference will be made to textual information items. The textual information items may be associated with, or linked to, non-textual items. So, for example, audio and/or video material may be associated with "MetaData" which is a textual information item defining that material in textual terms.

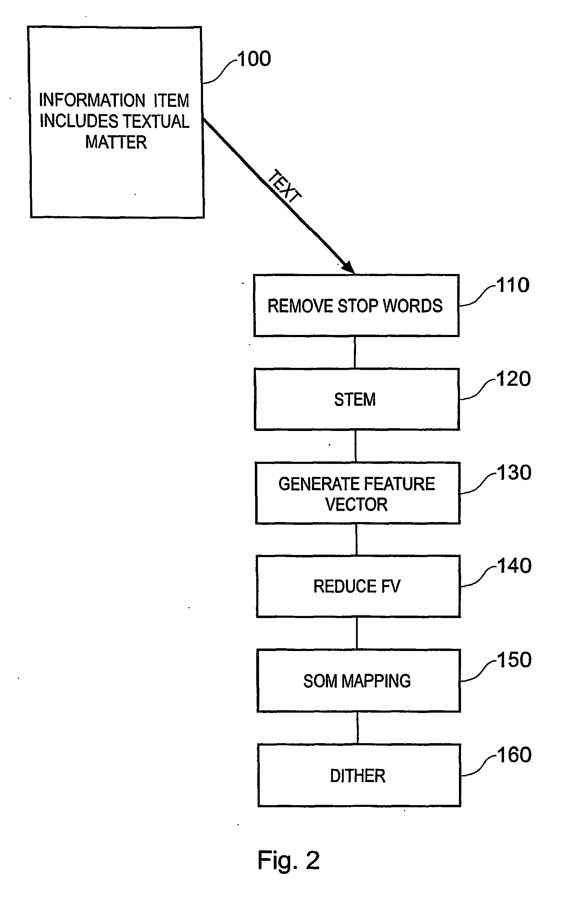

The information items are loaded onto the disk storage 30 in a conventional manner. Preferably, they are stored as part of a database structure which allows for easier retrieval and indexing of the items, but this is not essential. Once the information and items have been so stored, the process used to arrange them for searching is shown schematically in Figure 2.

It will be appreciated that the indexed information items need not be stored on the local disk drive 30. The information items could be stored on a remote drive connected to the system 10 via the network 50. Alternatively, information may be stored in a distributed manner, for example at various sites across the internet. If the information is stored at different internet or network sites, a second level of information storage could be used to store locally a "link" (e.g. a Universal Resource Identifier URI) to the remote information, perhaps with an associated summary, abstract or metadata associated with that link. So, the remotely held information would not be accessed unless the user selected the relevant link (e.g. from the results list 260 to be described below), although for the purposes of the technical description which follows, the remotely held information, or the abstract/summary/metadata, or the link/URI could be considered as the "information item".

In other words, a formal definition of the "information item" is an item from which a feature vector is derived and processed (see below) to provide a mapping to the SOM. The data shown in the results list 260 (see below) may be the actual information item which a user seeks (if it is held locally and is short enough for convenient display) or may be data representing and/or pointing to the information item, such as one or more of metadata, a URI, an abstract, a set of key words, a representative key stamp image or the like. This is inherent in the operation "list" which often, though not always, involves listing *data representing* a set of items. The data representing information items may include different types of information. The types of information of each information item and the data representing each type will be referred to as characterising information features.

In a further example, the information items could be stored across a networked work group, such as a research team or a legal firm. A hybrid approach might involve some information items stored locally and/or some information items stored across a local area network and/or some information items stored across a wide area network. In this case, the system could be useful in locating similar work by others, for example in a large multi-national research and development organisation, similar research work would tend to be mapped to similar output nodes in the SOM (see below). Or, if a new television programme is being planned, the present technique could be used to check for its originality by detecting previous programmes having similar content.

It will also be appreciated that the system 10 of Figure 1 is but one example of possible systems which could use the indexed information items. Although it is envisaged that the initial (indexing) phase would be carried out by a reasonably powerful computer, most likely by a non-portable computer, the later phase of accessing the information could be carried out at a portable machine such as a "personal digital assistant" (a term for a data processing device with display and user input devices, which generally fits in one hand), a portable computer such as a laptop computer, or even devices such as a mobile telephone, a video editing apparatus or a video camera. In general, practically any device having a display could be used for the information-accessing phase of operation.

The processes are not limited to particular numbers of information items.

The process of generating a self-organising map (SOM) representation of the information items will now be described with reference to Figures 2 to 6. Figure 2 is a schematic flow chart illustrating a so-called "feature extraction" process followed by an SOM mapping process.

Feature extraction is the process of transforming raw data into an abstract representation. These abstract representations can then be used for processes such as pattern classification, clustering and recognition. In this process, a so-called "feature vector" is generated, which is an abstract representation of the frequency of terms used within a document.

The process of forming the visualisation through creating feature vectors includes:
- Create "document database dictionary" of terms
- Create "term frequency histograms" for each individual document based on the "document database dictionary"
- Reduce the dimension of the "term frequency histogram" using random mapping
- Create a 2-dimensional visualisation of the information space.

Considering these steps in more detail, each document (information item) 100 is opened in turn. At a step 110, all "stop words" are removed from the document. Stop-words are extremely common words on a pre-prepared list, such as "a", "the", "however", "about", "and", and "the". Because these words are extremely common they are likely, on average, to appear with similar frequency in all documents of a sufficient length. For this reason they serve little purpose in trying to characterise the content of a particular document and should therefore be removed.

After removing stop-words, the remaining words are stemmed at a step 120, which involves finding the common stem of a word's variants. For example the words "thrower", "throws", and "throwing" have the common stem of "throw".

A "dictionary" of stemmed words appearing in the documents (excluding the "stop" words) is maintained. As a word is newly encountered, it is added to the dictionary, and running count of the number of times the word has appeared in the whole document collection (set of information items) is also recorded.

The result is a list of terms used in all the documents in the set, along with the frequency with which those terms occur. Words that occur with too high or too low a frequency are discounted, which is to say that they are removed from the dictionary and do not take part in the analysis which follows. Words with too low a frequency may be misspellings, made up, or not relevant to the domain represented by the document set. Words that occur with too high a frequency are less appropriate for distinguishing documents within the set. For example, the term "News" is used in about one third of all documents in a test set of broadcast-related documents, whereas the word "football" is used in only about 2% of documents in the test set. Therefore "football" can be assumed to be a better term for characterising the content of a document than "News". Conversely, the word "fottball" (a misspelling of "football") appears only once in the entire set of documents, and so is discarded for having too low an occurrence. Such words may be defined as those having a frequency of occurrence which is lower than two standard deviations less than the mean frequency of occurrence, or which is higher than two standard deviations above the mean frequency of occurrence.

A feature vector is then generated at a step 130.

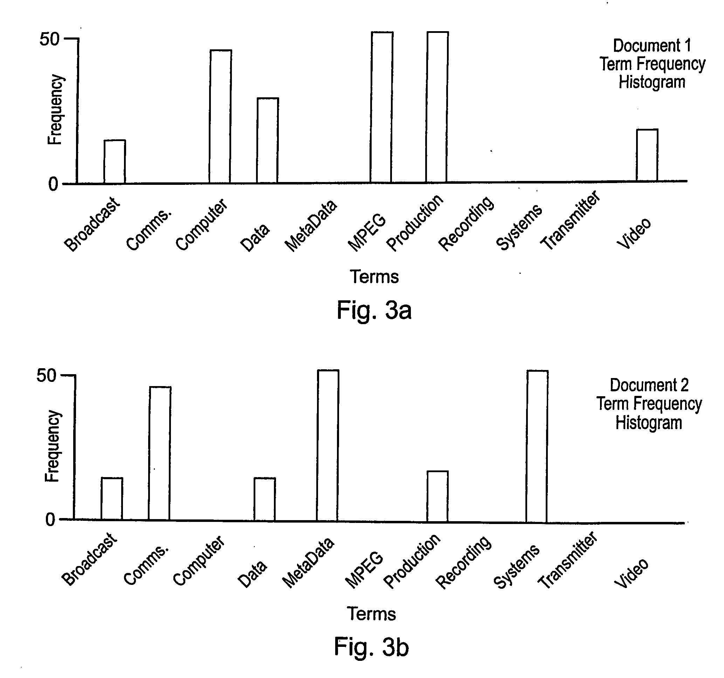

To do this, a term frequency histogram is generated for each document in the set. A term frequency histogram is constructed by counting the number of times words present in the dictionary (pertaining to that document set) occur within an individual document. The majority of the terms in the dictionary will not be present in a single document, and so these terms will have a frequency of zero. Schematic examples of term frequency histograms for two different documents are shown in Figures 3a and 3b.

It can be seen from this example how the histograms characterise the content of the documents. By inspecting the examples it is seen that document 1 has more occurrences of the terms "MPEG" and "Video" than document 2, which itself has more occurrences of the term "MetaData". Many of the entries in the histogram are zero as the corresponding words are not present in the document.

In a real example, the actual term frequency histograms have a very much larger number of terms in them than the example. Typically a histogram may plot the frequency of over 50000 different terms, giving the histogram a dimension of over 50000. The dimension of this histogram needs to be reduced considerably if it is to be of use in building an SOM information space.

Each entry in the term frequency histogram is used as a corresponding value in a feature vector representing that document. The result of this process is a (50000 x 1) vector containing the frequency of all terms specified by the dictionary for each document in the document collection. The vector may be referred to as "sparse" since most of the values will typically be zero, with most of the others typically being a very low number such as 1.

The size of the feature vector, and so the dimension of the term frequency histogram, is reduced at a step 140. Two methods are proposed for the process of reducing the dimension of the histogram.
i) Random Mapping - a technique by which the histogram is multiplied by a matrix of random numbers. This is a computationally cheap process.
ii) Latent Semantic Indexing - a technique whereby the dimension of the histogram is reduced by looking for groups of terms that have a high probability of occurring simultaneously in documents. These groups of words can then be reduced to a single parameter. This is a computationally expensive process.

The method selected for reducing the dimension of the term frequency histogram in the present embodiment is "random mapping", as explained in detail in the Kaski paper referred to above. Random mapping succeeds in reducing the dimension of the histogram by multiplying it by a matrix of random numbers.

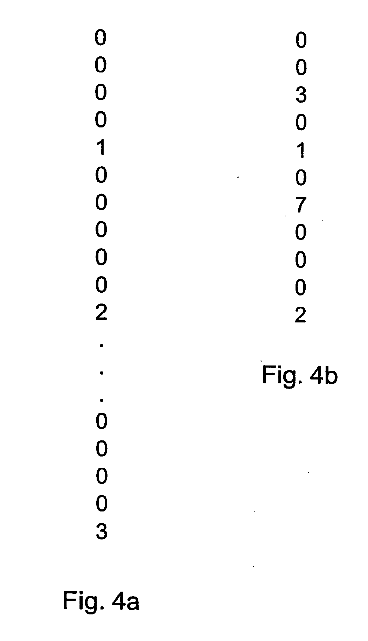

As mentioned above, the "raw" feature vector (shown schematically in Figure 4a) is typically a sparse vector with a size in the region of 50000 values. This can be reduced to size of about 200 (see schematic Figure 4b) and still preserve the *relative* orthogonal characteristics of the feature vector, that is to say, its relationship such as relative angle (vector dot product) with other similarly processed feature vectors. This works because although the number of orthogonal vectors of a particular dimension is limited, the number of *nearly* orthogonal vectors is very much larger.

In fact as the dimension of the vector increases any given set of randomly generated vectors are nearly orthogonal to each other. This property means that the relative direction of vectors multiplied by this a matrix of random numbers will be preserved. This can be demonstrated by showing the similarity of vectors before and after random mapping by looking at their dot product.

It can be shown experimentally that by reducing a sparse vector from 50000 values to 200 values preserves their relative similarities. However, this mapping is not perfect, but suffices for the purposes of characterising the content of a document in a compact way.

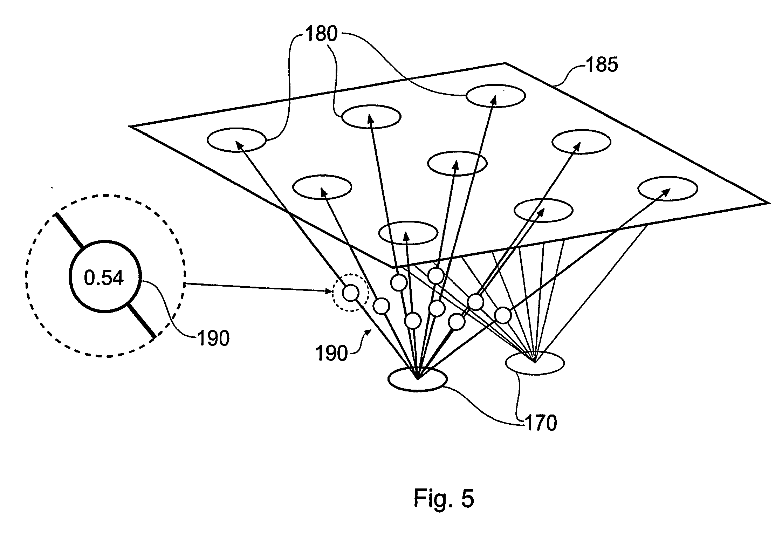

Once feature vectors have been generated for the document collection, thus defining the collection's information space, they are projected into a two-dimensional SOM at a step 150 to create a semantic map. The following section explains the process of mapping to 2-D by clustering the feature vectors using a Kohonen self-organising map. Reference is also made to Figure 5.

A Kohonen Self-Organising map is used to cluster and organise the feature vectors that have been generated for each of the documents.

A self-organising map consists of input nodes 170 and output nodes 180 in a two-dimensional array or grid of nodes illustrated as a two-dimensional plane 185. There are as many input nodes as there are values in the feature vectors being used to train the map. Each of the output nodes on the map is connected to the input nodes by weighted connections 190 (one weight per connection).

Initially each of these weights is set to a random value, and then, through an iterative process, the weights are "trained". The map is trained by presenting each feature vector to the input nodes of the map. The "closest" output node is calculated by computing the Euclidean distance between the input vector and weights associated with each of the output nodes.

The closest node, identified by the smallest Euclidean distance between the input vector and the weights associated with that node is designated the "winner" and the weights of this node are trained by slightly changing the values of the weights so that they move "closer" to the input vector. In addition to the winning node, the nodes in the neighbourhood of the winning node are also trained, and moved slightly closer to the input vector.

It is this process of training not just the weights of a single node, but the weights of a region of nodes on the map, that allow the map, once trained, to preserve much of the topology of the input space in the 2-D map of nodes.

Once the map is trained, each of the documents can be presented to the map to see which of the output nodes is closest to the input feature vector for that document. It is unlikely that the weights will be identical to the feature vector, and the Euclidean distance between a feature vector and its nearest node on the map is known as its "quantisation error".

By presenting the feature vector for each document to the map to see where it lies yields an x, y map position for each document. These x, y positions when put in a look up table along with a document ID can be used to visualise the relationship between documents.

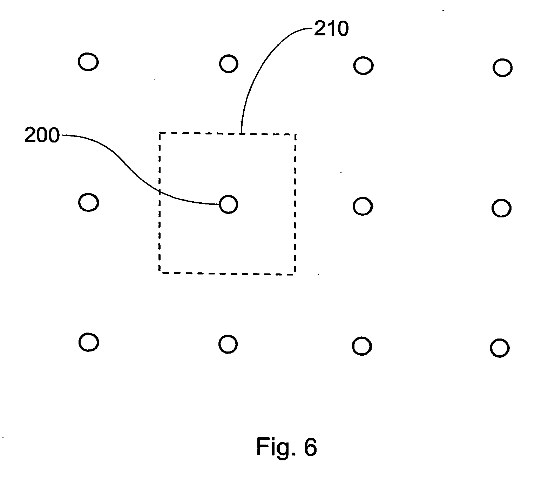

Finally, a dither component is added at a step 160, which will be described with reference to Figure 6 below.

A potential problem with the process described above is that two identical, or substantially identical, information items may be mapped to the same node in the array of nodes of the SOM. This does not cause a difficulty in the handling of the data, but does not help with the visualisation of the data on display screen (to be described below). In particular, when the data is visualised on a display screen, it has been recognised that it would be useful for multiple very similar items to be distinguishable over a single item at a particular node. Therefore, a "dither" component is added to the node position to which each information item is mapped. The dither component is a random addition of ±½ of the node separation. So, referring to Figure 6, an information item for which the mapping process selects an output node 200 has a dither component added so that it in fact may be mapped to any map position around a node 200 within the area 210 bounded by dotted lines on Figure 6.

So, the information items can be considered to map to positions on the plane of Figure 6 at node positions other than the "output nodes" of the SOM process.

At any time, a new information item can be added to the SOM by following the steps outlined above (i.e. steps 110 to 140) and then applying the resulting reduced feature vector to the "pre-trained" SOM models, that is to say, the set of SOM models which resulted from the self-organising preparation of the map. So, for the newly added information item, the map is not generally "retrained"; instead steps 150 and 160 are used with all of the SOM models not being amended. To retrain the SOM every time a new information item is to be added is computationally expensive and is also somewhat unfriendly to the user, who might grow used to the relative positions of commonly accessed information items in the map.

However, there may well come a point at which a retraining process is appropriate. For example, if new terms (perhaps new items of news, or a new technical field) have entered into the dictionary since the SOM was first generated, they may not map particularly well to the existing set of output nodes. This can be detected as an increase in a so-called "quantisation error" detected during the mapping of newly received information item to the existing SOM. In the present embodiments, the quantisation error is compared to a threshold error amount. If it is greater than the threshold amount then either (a) the SOM is automatically retrained, using all of its original information items and any items added since its creation; or (b) the user is prompted to initiate a retraining process at a convenient time. The retraining process uses the feature vectors of all of the relevant information items and reapplies the steps 150 and 160 in full.

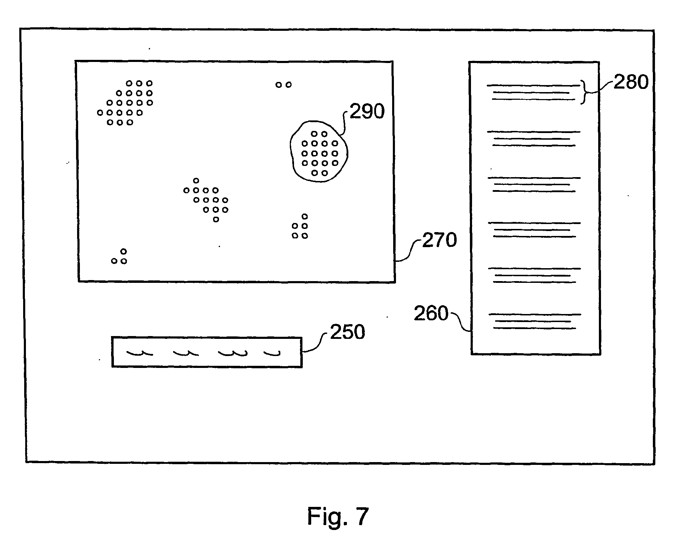

Figure 7 schematically illustrates a display on the display screen 60. The display shows a search enquiry 250, a results list 260 and an SOM display area 270.

In operation, initially, the display area 270 is blank. The user types a key word search enquiry into the enquiry area 250. The user then initiates the search, for example by pressing enter on the keyboard 70 or by using the mouse 80 to select a screen "button" to start the search. The key words in the search enquiry area 250 are then compared with the information items in the database using a standard keyword search technique. This generates a list of results, each of which is shown as a respective entry 280 in the list area 260. Then the display area 270 displays display points corresponding to each of the result items.

Because the sorting process used to generate the SOM representation tends to group mutually similar information items together in the SOM, the results for the search enquiry generally tend to fall in clusters such as a cluster 290. Here, it is noted that each point on the area 270 corresponds to the respective entry in the SOM associated with one of the results in the result list 260; and the positions at which the points are displayed within the area 270 correspond to the array positions of those nodes within the node array.

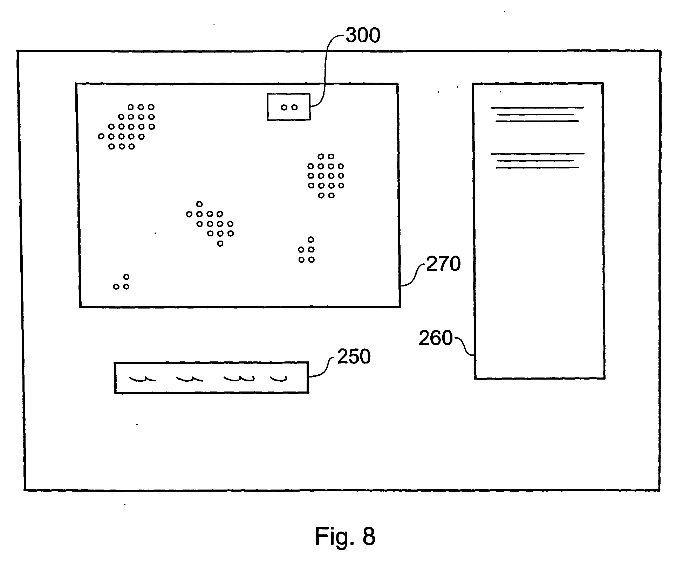

Figure 8 schematically illustrates a technique for reducing the number of "hits" (results in the result list). The user makes use of the mouse 80 to draw a boundary, which in this example is a rectangular box, 300 around a set of the display points displayed in area 270. In the results list area 260, only those results corresponding to points within the boundary 300 are displayed. If these results turn out not to be of interest, the user may draw another boundary encompassing a different set of display points.

It is noted that the results area 260 displays list entries for those results for which display points are displayed within the boundary 300 **and** which satisfied the search criteria in the word search area 250. The boundary 300 may encompass other display positions corresponding to populated nodes in the node array, but if these did not satisfy the search criteria they will not be displayed and so will not form part of the subset of results shown in the list 260.

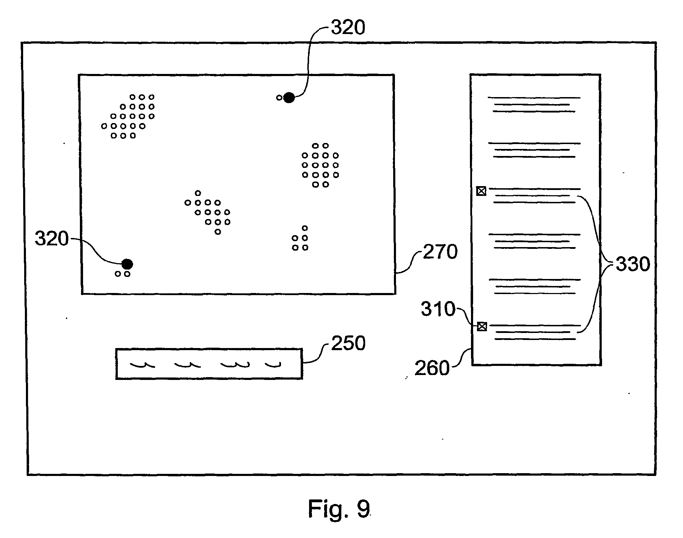

Figure 9 illustrates an embodiment of the present invention. Referring to Figure 9, step 920, when the Self Organising Map SOM is generated it has no labels, (unlike the SOM of Kohonen). Users require labels to give guidance for exploring the map. In embodiments of the invention the labels are automatically generated to match the particular needs of the users. Users generate a list of results of a search as described with reference to Figure 7 and/or Figure 8. A label is automatically dynamically generated according to the results and used to label the clusters of display points in the area 270.

### Cross-Cluster Association/Assisted Keyword Search

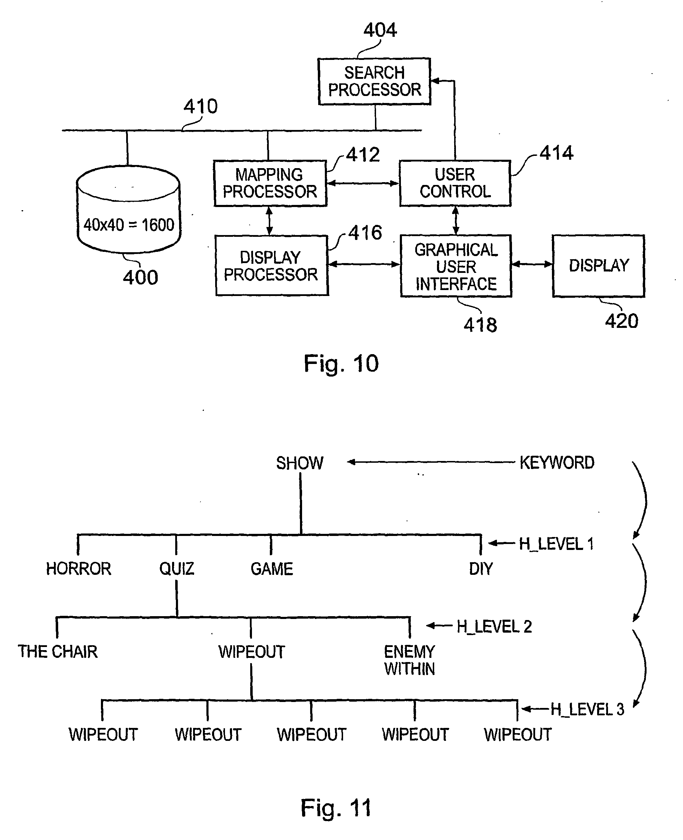

An example embodiment of the present invention will now be described with reference to Figures 10, 11 and 12.

In Figure 10 a data repository 400 containing a database of information items is connected by a data communications network 410 to a search processor 404 and to a mapping processor 412. The mapping processor is connected to a user control 414 and to a display processor 416. An output of the display processor 416 is received by a graphical user interface 418, which interfaces to a display 420. The display processor 416 is operable to process data from the mapping processor for display on the display screen.

The data repository 400 may be separately located to the mapping processor 412. Correspondingly the search processor may be separately located from the data repository 400, mapping processor 412 and those parts shown in Figure 10, which are utilised for displaying information, which are the display processor 416, the graphical user interface 418 and the display 420. Alternatively the mapping processor 412, the search processor 404 and the display processor 416 may be implemented in a form of software modules for execution on a general purpose computer such as that shown in Figure 1. However it will be appreciated that the mapping processor, the search processor and the display processor may be produced and located separately.

The embodiment shown in Figure 10 operates substantially as the storage and retrieval data processor as illustrated in Figure 1 in combination with the illustrations in Figures 7, 8 and 9. Figures 7, 8 and 9 provide example illustrations of how information items are searched with respect to a search query and how the results of the search are displayed. Correspondingly, the embodiment shown in Figure 10 is arranged to receive a search query, for example a keyword from the user control 414. In response to the keyword the search is conducted by the search processor 404 to identify in combination with the mapping processor a set of x, y positions in the array corresponding to information items identified as a result of the search. For example, for a 40x40 array of nodes there are 1600 positions in a square two-dimensional array. As explained above the search processor searches the information items in accordance with a search query. The search by the search processor results in a set of x, y positions for information items identified by the search processor as corresponding to the search query. The x, y positions of the results of the search are received by the mapping processor 412.

In an alternative embodiment, the search processor 404 may be arranged to search the information items and to generate search results, which identify information items which correspond to a search query. The mapping processor 412 may then receive data representing the results of the search identifying information items corresponding to the search query. The mapping processor then generates the x, y co-ordinates of the positions in the array corresponding to the identified information items.

The mapping processor 412 is operable to identify clusters of information items at a first global level by conducting a k-means clustering algorithm. The k-means clustering algorithm identifies the clusters and position of the clusters within the array. The k-means clustering algorithm is disclosed in book entitled "Neural Networks for Pattern Recognition," by Christopher M. Bishop, pp 187-188, Oxford University Press. A further dislosure of the k-means clustering algorithm is disclosed in the web address:
http://cne.gmu.edu/modules/dau/stat/clustgalgs/clust5 bdy.html

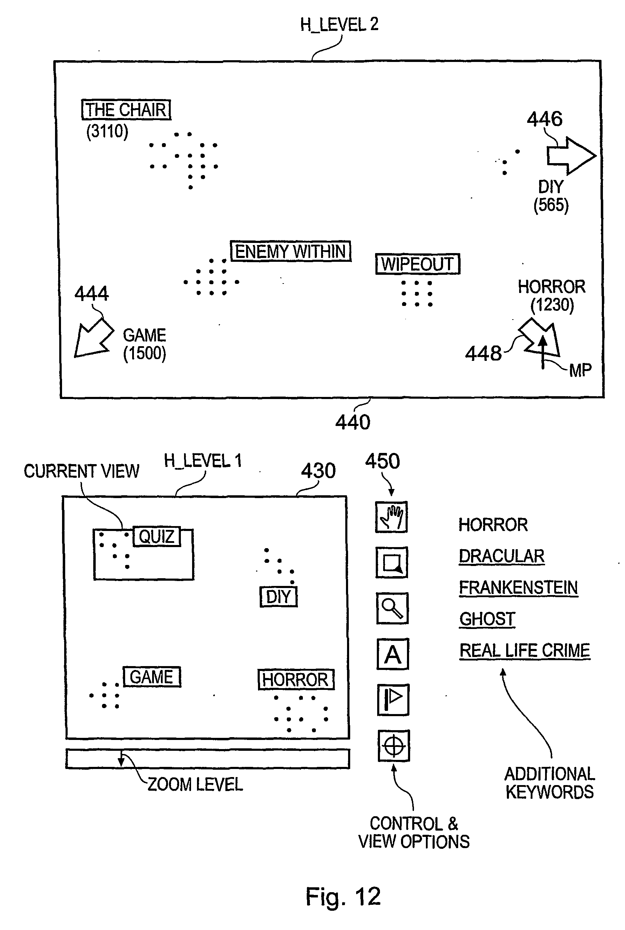

As illustrated in Figure 11 the results of the search on the keyword "show" might identify positions in the array corresponding to information items which have the word "show" as part of their metadata. Therefore, the result of performing the k-means clustering algorithm on the array identifies for example three clusters of information items which are "quiz", "game" and "DIY". These clusters of information items form a first hierarchical level h_levell. The display processor 416 receives data from the mapping processor 412 corresponding to the clustering of information items at the first hierarchical level h_levell. The display processor 416 processes the first hierarchical level of data so as to provide data representing a two-dimensional display of this first hierarchical h_levell. The data generated by the display processor 416 is fed to a graphical user interface 418 for display in a first area 430 on the display screen 420 as shown in Figure 12.

In some embodiments a further operation may be performed by the mapping processor 412 to refine the identification of clusters using the k-means algorithm. The further operation is known as "k-means clustering and pruning". The known k-means clustering process identifies groups of array positions for information items identified in the search results which denote similar information items. A further pruning process of determining whether adjacent sub-clusters of x, y positions of result items are part of the same main cluster is then performed. If a distance between the centres of two sub-clusters is less than a threshold value, then the two sub-clusters are deemed to be part of the same main cluster. The pruning is performed iteratively in known manner until the clustering is stable.

The mapping processor 412 operates to perform a further analysis of each of the clusters of information items identified at the first hierarchical level h_levell. In order to provide a user with a facility for examining the clusters of information items individually and identifying further clusters within those information items the mapping processor 412 forms a further hierarchical level. Accordingly, for each cluster of information items the k-means clustering algorithm is performed for that cluster to identify further clusters within that first hierarchical level of information items. So for example, as illustrated in Figure 11 if the k-means algorithm is performed on the "quiz" cluster then three further clusters are identified at a second hierarchical level h_level2.

As illustrated for the first hierarchical level each cluster is labelled in accordance with a keyword. The keyword is identified by finding the most common word which each of the information items within the cluster have present in the metadata associated with that information item. So for example in the first hierarchical level three clusters are identified by the words "quiz", "game" and "DIY".

In a corresponding manner to the labelling of the clusters of the first hierarchical level h_level1 a keyword is identified for each of the clusters in the second hierarchical level h_level2. Accordingly, the three clusters are labelled "the chair", "wipeout" and "enemy within". Each of these three clusters comprises different episodes of a quiz show.

As will be appreciated a further iteration of the analysis of each cluster can be performed. This is achieved by performing the k-means algorithm on each of the clusters identified at the second hierarchical level h_level2. As illustrated in Figure 11 the "wipeout" information cluster is further analysed using the k-means clustering algorithm. However, at the third hierarchical level h_level3 only individual information items are revealed and so as illustrated in Figure 11 the third hierarchical level h_level3 identifies individual episodes of "wipeout".

The mapping processor 412 is therefore operable to identify clusters of information items at different hierarchical levels. Data representing each of the hierarchical levels is fed to the display processor 416. Accordingly, in combination with the graphical user interface 418 a second area may be displayed on the display 420 which may for example correspond to the second hierarchical level h_level2. Thus, using the zoom control a user may zoom into the clusters displayed in the first hierarchical level h_level1. The zoom control may be operated using the user control 414. Accordingly, zooming into a particular cluster can have an effect of revealing the second hierarchical level of information items h_level2. Alternatively, the user control 414 may be used to select a "current view" area within the first area. Accordingly, the second display is illustrated with respect to the clusters identified within the "quiz" cluster identified at the first hierarchical level shown in the first display h_level1.

A further advantage provided by embodiments of the present invention is an arrangement in which the second or a subsequent level, which is displayed in a second or subsequent area of the display, may be provided with indicators of other clusters. The indicators direct the user to alternative clusters to the keyword associated with the cluster being viewed at a lower hierarchical level. Thus the clusters which are being illustrated at a lower hierarchical level within the second display area 440, will have alternative clusters to the cluster being viewed. For example, in Figure 12 in the first display area 430 the first hierarchical level illustrates the three clusters of "quiz", "game" and "DIY". Since the zoom control is used to zoom in at the "quiz" cluster, then the second display area 440 provides a display of the clusters within the "quiz" cluster which are "the chair", "enemy within" and "wipeout". However, alternative keywords to the "quiz" cluster are "DIY", "horror" and "game" as illustrated in the first area. Accordingly, arrows 444, 446 and 448 are provided to direct the user to clusters of information items which are at the same hierarchical level as the "quiz" cluster being displayed in the second display area. Accordingly, if the user wishes then to review a different cluster from the first hierarchical level to reveal the clusters in the second hierarchical level, then the user can use the arrows to navigate to the alternative clusters within the first hierarchical level. Furthermore, advantageously the arrows are labelled with the keyword label for the cluster, which appears in the first hierarchical level. In other embodiments, in order to provide the user with an illustration of the relative number of items in the cluster then this number is shown alongside the keyword associated with the direction-indicating arrow. The user control and the display may be arranged to indicate this number when the mouse pointer MP passes or is positioned over the indicating arrow.

A further advantageous feature of some embodiments is to provide a list of additional keywords, that is to say the keywords associated with second level clusters within first level clusters. As illustrated in Figure 12 for a clustering providing the further first level cluster of "horror" then the additional words corresponding to the clusters at the second level within that first level cluster "horror" are generated when a mouse pointer MP is positioned over the arrow associated with "horror". As a result the user is provided with a very efficient illustration of the content of the information items associated with the first level clusters without having to view those clusters within the second display area 440. As illustrated in Figure 12 the display area may further include control icons shown generally as 450 which are used to both review and navigate around the information items appearing in the first display area 430.

### Multi-modal Refined Search

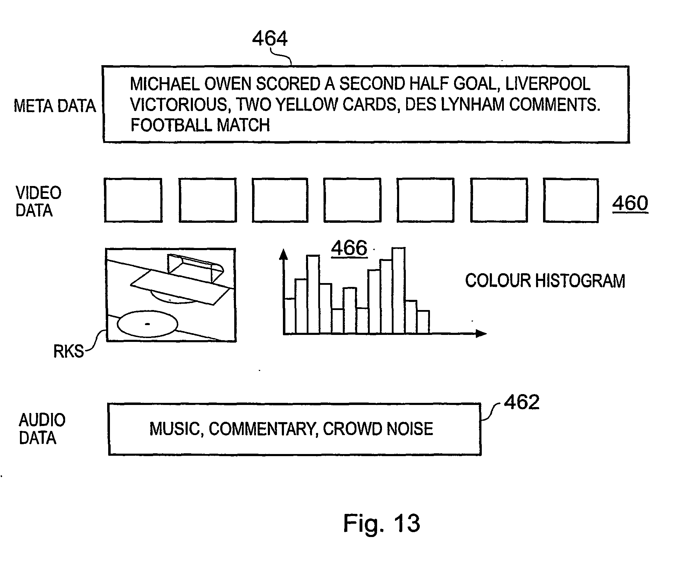

Another example embodiment of the present invention will now be described with reference to Figures 10 in combination with Figures 13 to 17. Figure 13 provides an illustrative representation of the type of characterising information features, which are stored in association with an information item. For example, the information item may be a section of audio/video data from a television programme. In the current example the programme provides highlights of a football match. Accordingly, the data item includes video data 460 and audio data. Associated with the audio data is audio metadata illustrated within a box 462. The audio metadata describes the content and the type of audio signals associated with the video data. For the present example the audio data includes "music", "commentary", "crowd noise" but may include one or more other types of metadata indicating the type of audio signals. In addition to the video data and audio data the information items may also include other metadata which describe the contents or attributes of the video and audio data. For the present example metadata is illustrated within a box 464 and is shown to include a description of the content of the video programme. It is the words contained in this metadata which are used to build a feature vector from which the SOM is generated. However, in other embodiments of the invention the set of information items contained in the data repository 400 may be searched with respect to the audio data that is the audio metadata 462 or on the video data. To this end a representative key stamp may be generated from the frames of video data 460.

The representative key stamp RKS is generated by forming a colour histogram of each of the frames of video data. The colour histogram for all or selected video frames are combined and then normalised to produce a composite colour histogram, which is illustrated in representative form as a bar graph 466 in Figure 13. The composite colour histogram is then compared with the colour histogram for each of the video frames. A distance is determined between the colour histogram for each frame and the composite colour histogram by summing a distance of each of the columns of the colour histogram for each video frame with the corresponding columns of the composite histogram. The representative key stamp RKS having a colour histogram which has the smallest distance with respect to the composite colour histogram is selected. For the programme describing a football match, then correspondingly the representative key stamp produced would be most likely to be a video image of a part of a football pitch, which is illustrated by the representative key stamp RKS shown in Figure 13.

In other embodiments an RKS may be generated for each information item from the video frames, by any of the following methods:
- A user may select the frame, which is considered to be the most representative frame corresponding to the overall content of the information item. This method may provide improved reliability, since the user ensures that the video frame is selected which subjectively represents an information item. However this is more time consuming.
- A user may select the first frame or a random frame within an information item. This may be a less reliable method for selecting an appropriate RKS.
- Other methods for processing the video frames and selecting an RKS based on the content of the image frames are envisaged.

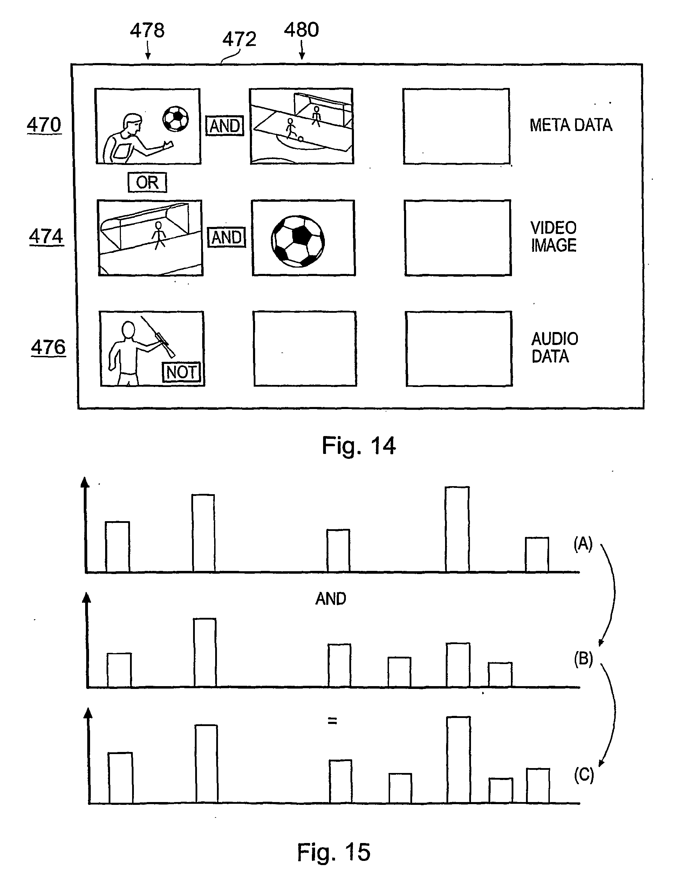

Embodiments of the present invention can provide a facility for producing a refined search based upon selected characterising information features. In one embodiment the search processor 142 is operable to search those information items which were identified in a first search in accordance with either an item of metadata, a video image or audio data. In alternative embodiments the search may be conducted just on metadata or just video data or only audio data or any combination thereof. To facilitate the formation of a search query, the display device 420 shown in Figure 10 may include a further graphical display provided by the graphical user interface 418 which is illustrated in Figure 14.

In Figure 14 a first row 470 within a display area 472 provides a user with a facility for selecting query information based on metadata. Accordingly, if an image representative key stamp from an information item is placed within the window in this row then metadata associated with this information item (as illustrated in Figure 13) will be added to the search query. Accordingly, one or more representative key stamps from different information items may be introduced into the search query for the characterising information feature of type metadata. Correspondingly, in the second row 474 video frames, which have been selected by the user, are introduced to form part of the search query. For example, a user may browse a particular item of video data and select a frame of interest. The user may then place this image frame in the row 474 to form part of the search query. The user may introduce one or more video frames.

A user may also select an information item to be searched in accordance with the audio data within that information item. Accordingly, the third row within the display area 476 provides a facility for a user to introduce a representative image of that information item to identify within the row for audio data that the search query is to include audio data corresponding to that information item within the search query.

In addition to selecting information items to be searched in accordance with the type of the characterising information features, embodiments of the present invention also provide a facility for searching in accordance with Boolean operators between the selected information items. As illustrated in Figure 14, the information items which have been selected for a metadata search, are to be searched in accordance with an "AND" operator as shown between the first two columns 478, 480. However, the search query between the first metadata and the first video image items in the search query are connected by an "OR" operator. The two items to be searched for the video image data are connected by an "AND" operator. Also the information item which is to be searched in accordance with audio data is to be searched in the search query in accordance with a "NOT" operator.

Having built the search query, the search processor 404 is operable to search the information items identified from a keyword search in accordance with the search query built from the selection made by the user and illustrated in Figure 14. The search processor searches the information items differently in dependence upon the type of characterising information features selected as will be explained in the following paragraphs:

For the example of searching for characterising information features such as metadata, then for any information item the feature vector for that information item generated from the metadata can be used to identify a point in the two-dimensional array corresponding to that feature vector. Accordingly, information items within a predetermined distance of that identified position in the array can be returned as a result of the search query. However, if more than one information item has been selected within the metadata search row then a search query must be built in a way which searches both of these items in accordance with the Boolean operator selected.

For the example of the "AND" Boolean operator then the feature vector for each information item is combined to form a composite feature vector as illustrated in Figure 15. To this end, the values associated with each of the words within the metadata are added together and normalised to produce the composite feature vector. Thus as illustrated in Figure 15 the two feature vectors A, B associated with the user selected metadata which have their representative key stamps illustrated in row 470 and columns 478 to 480 and the metadata search query line 470 are combined together to form the feature vector C. The search processor may then take the feature vector C and compare this with the SOM. Having identified the closest position in the array corresponding to the composite feature vector C information items within a predetermined number of positions within the array from that identified position in the array are returned as a result of the search query.

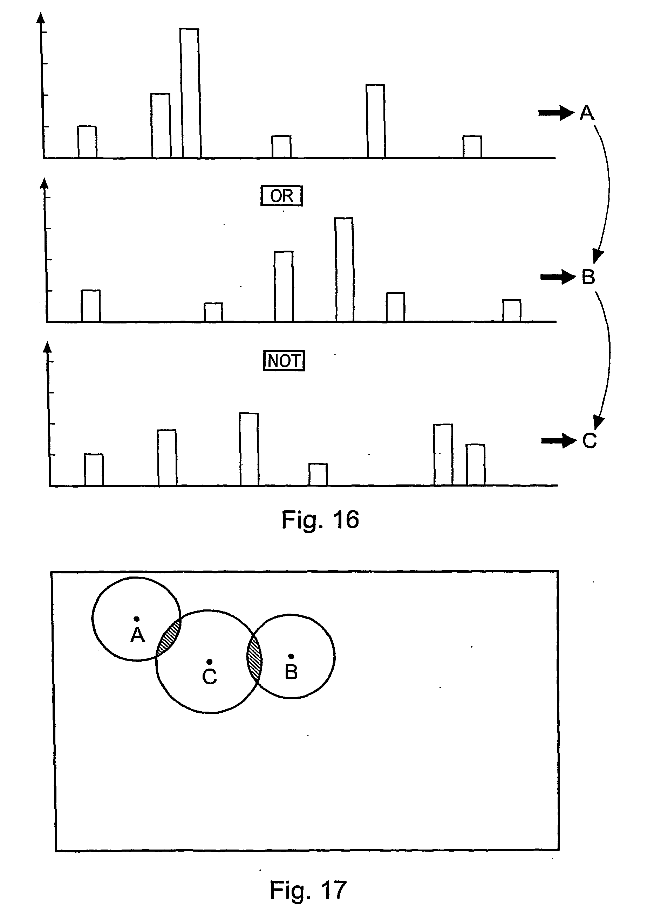

For the example of the Boolean "OR" operator for a corresponding metadata search then for the first feature vector A and the second feature B the corresponding position in the array for those feature vectors are identified. As such, the result of the search query is to return all the information items within a predetermined number of positions of each of those identified points in the array. This is illustrated in Figures 16 and 17. In Figure 17 positions in the two-dimensional array corresponding to feature vector A and corresponding to feature vector B are identified. As illustrated in Figure 17 positions in the array within a predetermined radius of the array positions for A and B can then be returned as identified as a result of the search query. However, if a further feature vector C is identified in the search query and a "NOT" Boolean operator is specified for this further feature vector then again the position in the array corresponding to feature vector C is identified. Accordingly, again the information items within the predetermined radius of array positions from C may be identified. However, as a result of the "NOT" operator any mutually inclusive array positions identified between the radius from the array positions for the feature vectors C and A and B are excluded from the results of the search. Accordingly, the search processor is arranged to return the information items corresponding to the positions in the array produced from A or B but not C.

For the second line in the search query corresponding to video image data being the characterising feature of the search, then the search processor is operable to search the video data for representative key stamps corresponding to the selected user video image. To this end, the colour histogram associated with the user selected video image is compared with the colour histogram for each of the representative key stamps associated with the information items. A distance is calculated between the colour histogram of the representative key stamp of each of the information items and the colour histogram of the user specified video image. This is effected by calculating a distance between each of the columns representing the colour components of that image and summing these distances for each column. The array position corresponding to the information item having the least distance between the colour histogram of the user selected video image and that of the representative key stamp corresponding to that array position is identified. Again the results of the query would be to return information items having array positions within a predetermined number of positions from the identified array position.

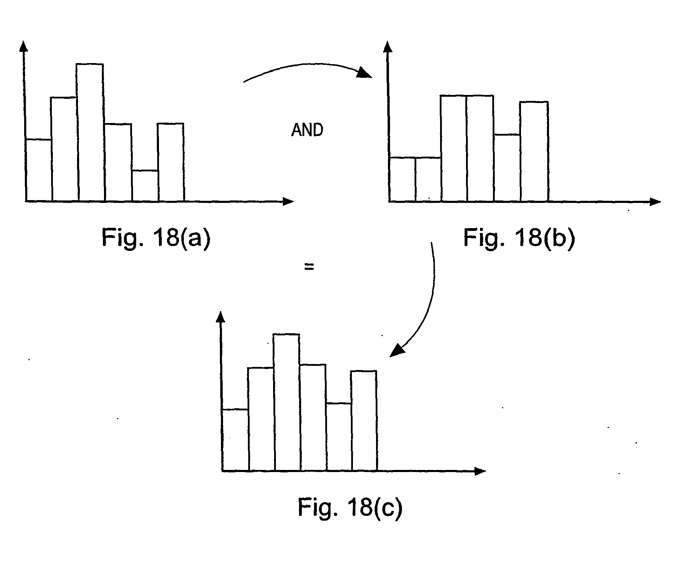

For the case of Boolean operators then again a colour histogram can be formed by combining the colour histograms for two images selected and specified for the Boolean "AND" operator. The process of forming a composite colour histogram is illustrated in Figure 18. The colour histograms for the first and second user selected images provided in row 474 and the columns 478, 480 of the video image search query row within the display area illustrated in Figure 14 are combined by averaging the values in each of the columns of the colour histogram. Thus, the two colour histograms illustrated in Figures 18a and 18b are combined to form the colour histogram formed in Figure 18c. It is this colour histogram which is searched with respect to the representative key stamps of the information items which are to be searched.

For the example of audio data then the search processor may form a feature vector from the audio metadata associated with the selected information item. For example, the audio metadata may identify harmonics present in the audio signal, speech data or whether there is music present within the audio signals represented by the audio metadata. In addition, the metadata may identify whether a particular speaker is present on the audio signal such as Tony Blair or a particular commentator, such as John Motson. Accordingly, again a feature vector may be generated from the selected audio data which may be searched with respect to other feature vectors associated in particular with audio data. In a corresponding way to that explained above, the Boolean operators may be used to combine a search for more than one audio metadata type. For the example of the "AND" operator the audio metadata items may be combined to produce a composite metadata item. Searching for a corresponding information item which has a feature vector which is closest to this composite item will identify an information item. The search processor may then recover information items within a predetermined number of positions within the array for both metadata items when an "OR" operator is specified. Again the "NOT" Boolean operator will serve to exclude information items returned having matching audio data from the results of the search query.

The embodiments of the present invention have been provided for refining a search from identified information items. However it will be appreciated that in other embodiments the search query formed by the display illustrated in Figure 14 and the application of that search query with respect to metadata, video image data and audio data may be provided to search the entire set of information within the data repository 400.

Various modifications may be made to the embodiments described above without departing from the scope of the present invention. Various aspects and features of the present invention are defined in the appended claims.

## Claims

1. An information retrieval apparatus for searching a set of information items and displaying the results of the search using a self-organising map (185), the information items each having a set of characterising information features which include at least one of metadata describing the content or attributes of the information item, data representative of video images or data representative of audio signals, at least one of the characterising information features for each information item being used to form a feature vector, the feature vectors being used to train the self-organising map (185) to the effect that a feature vector of an information item when applied to an input (170) of the self-organising map (185) identifies one of a plurality of output nodes (180), the output nodes (180) being arranged to identify points within the self-organising map (185), the apparatus comprising
a search processor (404) operable
to generate a user defined feature vector from at least one of the characterising information features defined by a user,
to search the set of information items by applying the user defined feature vector to the input of the self-organising map to identify information items having characterising information features corresponding to that of the user defined characterising information features,
a graphical user interface (418) for displaying a representation of at least some of the information items identified by the search processor, and
a user control (414) providing a facility for selecting a video frame associated with an information item and/or audio data associated with an information item to form a search query, and the search processor (404) is operable to search the set of information items by forming the user defined feature vector from the search query and applying the user defined feature vector to the self-organising map (185) to identify information items corresponding to the selected video frame and/or the audio data, wherein the user control (414) is operable to provide a user with a facility for selecting a plurality of video image frames from identified information items to form the search query and to specify a search relationship between the selected video frames in accordance with OR, AND or NOT Boolean logical operators, and the set of information items searched each include a representative key stamp of video data formed by identifying a plurality of representative video frames of the information item, forming a colour histogram of each of the selected video frames, combining the histograms of each of the representative video frames by averaging the values in each of the columns of the histograms and normalising the combined histograms in order to select the representative key stamp as the video frame image having a colour histogram which has the smallest distance to the normalised combined histogram;
wherein if the Boolean operator is an OR, then the search processor (404) is operable to identify information items having a representative key stamp with a colour histogram which is within a predetermined distance of each of the user selected image frames, or, if the Boolean operator is an AND, then the search processor (404) is operable to combine the colour histograms for each of the user selected information items by averaging the values in each of the columns of the histograms, and to identify information items having a representative key stamp with a colour histogram which is within a predetermined distance of the combined colour histogram, or, if the Boolean operator is a NOT, then the search processor is operable to exclude information items having a representative key stamp with a colour histogram which is within a predetermined distance of the user selected video image frame.

2. An information retrieval apparatus as claimed in Claim 1, wherein the user control (414) is operable to provide a user with a facility for selecting a plurality of audio data from identified information items to form a search query and to specify a search relationship between the selected audio data in accordance with OR, AND or NOT Boolean logical operators, and if the Boolean operator is an OR, then the search processor (404) is operable to identify information items within a predetermined number of positions of the output nodes of the self-organising map (185) from each output node position identified by the user defined feature vector formed from the audio data associated with each selected information item, or, if the Boolean operator is an AND, then the search processor (404) is operable to combine the audio meta data corresponding to each of the user selected information items, and to identify information, items within a predetermined number of positions of the output nodes of the self-organising map (185) from an output node position identified by the user defined feature vector corresponding to the combined audio data, or, if the Boolean operator is a NOT, then the search processor (404) is operable to exclude information items within a predetermined number of positions of the output nodes of the self-organising map (185) from an output node position identified by the user defined feature vector associated with the user selected information item, the search processor (404) being operable to search for information items relating to the selected audio data by identifying information items having the same and/or similar audio data.

3. A method of searching a set of information items and displaying the results of the search using a self-organising map (185), the information items each having a set of characterising information features which include at least one of metadata describing the content or attributes of the information item, data representative of video images or data representative of audio signals, at least one of the characterising information features for each information item being used to form a feature vector, the features vectors being used to train the self-organising map (185) to the effect that a feature vector of an information item when applied to an input (170) of the self-organising map (185) identifies one of a plurality of output nodes (180), the output nodes being arranged to identify points within the self-organising map, the method comprising
generating a user defined feature vector from at least one of the characterising information features defined by a user,
searching the set of information items in accordance with the user defined characterising information feature by applying the user defined feature vector to the input of the self organising map to identify information items having characterising information features corresponding to that of the user defined characterising information features,
displaying a representation of at least some of the information items identified by the searching, wherein the generating the user defined feature vector from the user defined characteristic information features includes
selecting a video frame associated with an information item and/or audio data associated with an information item to form a search query, and
searching the set of information items by forming the user defined feature vector from the search query corresponding to the selected video frame and/or the audio data and applying the user defined feature vector to the self-organised map (185) to identify information items corresponding to the selected video frame and/or the audio data, wherein the selecting the video image to form the search query comprises
selecting a plurality of video image frames from identified information items to form the search query and to specify a search relationship between the selected video frames in accordance with OR, AND or NOT Boolean logical operators, and the set of information items searched each include a representative key stamp of video data formed by identifying a plurality of representative video frames of the information item, forming a colour histograms of each of the selected video frames, combining the histograms of each of the representative video frames by averaging the values in each of the columns of the histograms and normalising the combined histograms in order to select the representative key stamp as the video frame image having a colour histogram which has the smallest distance to the normalised combined histogram;
wherein if the Boolean operator is an OR, then the search processor is operable to identify information items having a representative key stamp with colour histogram which is within a predetermined distance of each of the user selected image frames, or, if the Boolean operator is an AND, then the search processor is operable to combine the colour histograms for each of the user selected information items by averaging the values in each of the columns of the histograms, and to identify information items having a representative key stamp with a colour histogram which is within a predetermined distance of the combined colour histogram, or, if the Boolean operator is a NOT, then the search processor is operable to exclude information items having a representative key stamp with a colour histogram which is within a predetermined distance of the user selected video image frame.

4. A method of searching as claimed in Claim 3, wherein the selecting the audio data to form the search query comprises
selecting a plurality of audio data from identified information items to form a search query and to specify a search relationship between the selected audio data in accordance with OR, AND or NOT Boolean logical operators, and if the Boolean operator is an OR, then the search processor is operable to identify information items within a predetermined number of positions of the output nodes of the self-organising map from each output node position identified by the user defined feature vector formed from the audio data associated with each selected information item, or, if the Boolean operator is an AND, then the search processor is operable to combine the audio meta data corresponding to each of the user selected information items, and to identify information items within a predetermined number of positions of the output nodes of the self-organising map (185) from an output node position identified by the user defined feature vector corresponding to the combined audio data, or, if the Boolean operator is a NOT, then the search processor is operable to exclude information items within a predetermined number of positions of the output nodes of the self-organising map (185) from an output node position identified by the user defined feature vector associated with the user selected information item.

5. An information retrieval apparatus as claimed in claim 1 or 2 including a graphical user interface (418) for specifying the search query for searching the set of information items of the information retrieval apparatus, the information items each having a set of characterising information features, the interface comprising
rows of fields, each field providing a facility for selecting information items from the set of information items, each row defining a search condition for forming a search query, and each row specifying a search condition for one of selected metadata, selected video data or related audio data.

6. An information retrieval apparatus as claimed in Claim 5, wherein a plurality of information items may be selected for each row, and if more than one information feature is provided in each row, then the conditions for the search query are combined in accordance with user specified Boolean operators.

7. An information retrieval apparatus as claimed in Claim 5 or 6, wherein the characterising information features are at least one of metadata, video images and audio metadata.

8. A computer program comprising code means adapted to perform all the steps of claims 3 or claim 4, when said program is run on a data processing system.

9. A computer program as claimed in claim 8, embodied on a computer readable medium.

10. A computer program as claimed in claim 9, wherein the medium is a storage medium.

11. A computer program as claimed in claim 9, wherein the medium is a transmission medium.

## Patentansprüche

1. Informationsabrufvorrichtung zum Suchen eines Satzes an Informationsposten und zum Anzeigen der Ergebnisse der Suche unter Verwendung eines selbstorganisierenden Verzeichnisses (185), wobei die Informationsposten jeweils einen Satz charakterisierender Informationsmerkmale haben, welche zumindest eines von Metadaten, welche den Inhalt oder Attribute des Informationspostens beschreiben, Daten, welche für Videobilder repräsentativ sind, oder Daten, welche für Audiosignale repräsentativ sind, aufweisen, wobei zumindest eines der charakterisierenden Informationsmerkmale für jeden Informationsposten verwendet wird, um einem Merkmalsvektor zu bilden, wobei die Merkmalsvektoren verwendet werden, das selbstorganisierende Verzeichnis (185) zu trainieren, zu dem Effekt, dass ein Merkmalsvektor eines Informationspostens, wenn er einem Eingang (170) des selbstorganisierenden Verzeichnisses (185) zugeführt wird, einen von mehreren Ausgangsknoten (180) identifiziert, wobei die Ausgangsknoten (180) eingerichtet sind, Punkte innerhalb des selbstorganisierenden Verzeichnisses (185) zu identifizieren,
wobei die Vorrichtung umfasst:
einen Suchprozessor (404), der betriebsfähig ist,
um einen benutzer-definierten Merkmalsvektor von zumindest einem der charakterisierenden Informationsmerkmale, welche durch einen Benutzer definiert sind, zu erzeugen,
einen Satz an Informationsposten zu suchen, indem der benutzer-definierte Merkmalsvektor dem Eingang des selbstorganisierenden Verzeichnisses zugeführt wird, um Informationsposten zu identifizieren, welche charakterisierende Informationsmerkmale haben, welche denjenigen der benutzer-definierten charakterisierenden Infonnationsmerkmale entsprechen,
eine grafische Benutzerschnittstelle (418) zum Anzeigen einer Darstellung von zumindest einiger der Informationsposten, welche durch den Suchprozessor identifiziert werden, und
eine Benutzersteuerung (414), welche ein Betriebsmittel bereitstellt, um einen Videorahmen in Verbindung mit einem Informationsposten und/oder Audiodaten in Verbindung mit einem Informationsposten auszuwählen, um eine Suchabfrage zu bilden, und der Suchprozessor (104) betriebsfähig ist, den Satz an Informationsposten zu suchen, indem der benutzer-definierte Merkmalsvektor von der Suchabfrage gebildet wird, und der benutzer-definierte Merkmalsvektor dem selbstorganisierenden Verzeichnis (185) zugeführt wird, um Informationsposten entsprechend dem ausgewählten Videorahmen und/oder den Audiodaten zu identifizieren, wobei die Benutzersteuerung (414) betriebsfähig ist, einen Benutzer mit einem Betriebsmittel zu beliefern, um mehrere Videobilderrahmen von den identifizierten Informationsposten auszuwählen, um die Suchabfrage zu bilden und um eine Suchbeziehung zwischen den ausgewählten Videorahmen gemäß logischen Booleschen Operatoren ODER, UND oder NICHT zu spezifizieren, und der Satz an gesuchten Informationsposten jeweils einen entsprechenden Schlüsselstempel von Videodaten umfasst, welche durch Identifizieren mehrerer repräsentativer Videorahmen des Informationspostens gebildet werden, durch Bilden eines Farb-Histogramms von jedem der ausgewählten Videorahmen, durch Kombinieren der Histogramme von jedem der repräsentativen Videorahmen durch Mittelwertbildung der Werte in jeder der Spalten der Histogramme und durch Normierung der kombinierten Histogramme, um den repräsentativen Schlüsselstempel als das Videorahmenbild auszuwählen, welches ein Farb-Histogramm hat, welches den kleinsten Abstand zum normierten kombinierten Histogramm hat;
wobei, wenn der Boolesche Operator ein ODER ist, der Suchprozessor (404) betriebsfähig ist, Informationsposten zu identifizieren, welche einen repräsentativen Schlüsselstempel haben, mit einem Farb-Histogramm, welches innerhalb eines vorgegebenen Abstandes von jedem der benutzer-ausgewählten Bildrahmen ist, oder, wenn der Boolesche Operator UND ist, der Suchprozessor (404) betriebsfähig ist, die Farb-Histogramme für jeden der benutzer-ausgewählten Informationsposten durch Mittelwertbildung der Werte in jedem der Spalten der Histogramme zu kombinieren, und um Informationsposten zu identifizieren, welche einen entsprechenden Schlüsselstempel haben, mit einem Farb-Histogramm, welches innerhalb eines vorgegebenen Abstands des kombinierten Farb-Histogramms ist, oder, wenn der Boolesche Operator NICHT ist, der Suchprozessor betriebsfähig ist, Informationsposten auszuschließen, welche einen repräsentativen Schlüsselstempel haben, mit einem Farb-Histogramm, welches innerhalb eines vorgegebenen Abstands des benutzer-ausgewählten Videobildrahmens ist.

2. Informationsabrufvorrichtung nach Anspruch 1, wobei die Benutzersteuerung (414) betriebfähig ist, einen Benutzer mit einem Betriebsmittel zu beliefern, um mehrere Audiodaten von identifizierten Informationsposten auszuwählen, um eine Suchabfrage zu bilden und um eine Suchbeziehung zwischen den ausgewählten Audiodaten gemäß logischen Booleschen Operatoren ODER, UND oder NICHT zu spezifizieren, und, wenn der Boolesche Operator ein ODER ist, der Suchprozessor (404) betriebsfähig ist, Informationsposten innerhalb einer vorgegebenen Anzahl von Positionen der Ausgangsknoten des selbstorganisierenden Verzeichnisses (185) von jeder Ausgangsknotenposition zu identifizieren, welche durch den benutzer-definierten Merkmalsvektor identifiziert wird, der von den Audiodaten in Verbindung mit jedem ausgewählten Informationsposten gebildet wird, oder, wenn der Boolesche Operator ein UND ist, der Suchprozessor (404) betriebsfähig ist, die Audio-Metadaten entsprechend jedem der benutzer-ausgewählten Informationsposten zu kombinieren, und um Informationsposten innerhalb einer vorgegebenen Anzahl von Positionen der Ausgangsknoten des selbstorganisierenden Verzeichnisses (185) von einer Ausgangsknotenposition zu identifizieren, welche durch den benutzer-definierten Merkmalsvektor identifiziert wird, der den kombinierten Audiodaten entspricht, oder, wenn der Boolesche Operator ein NICHT ist, der Suchprozessor (404) betriebsfähig ist, Informationsposten innerhalb einer vorgegebenen Anzahl an Positionen der Ausgangsknoten des selbstorganisierenden Verzeichnisses (185) von einer Ausgangsknotenposition auszuschließen, welche durch den benutzer-definierten Merkmalsvektor identifiziert wird, in Verbindung mit dem benutzer-ausgewählten Informationsposten, wobei der Suchprozessor (404) betriebsfähig ist, nach Informationsposten zu suchen, welche sich auf die ausgewählten Audiodaten beziehen, durch Identifizieren von Informationsposten, welche die gleichen und/oder ähnlichen Audiodaten haben.

3. Verfahren zum Suchen eines Satzes an Informationsposten und zum Anzeigen der Ergebnisse der Suche unter Verwendung eines selbstorganisierenden Verzeichnisses (185), wobei die Informationsposten jeweils einen Satz an charakterisierenden Informationsmerkmalen haben, welche zumindest eines von Metadaten umfassen, welche den Inhalt oder Attribute des Informationspostens beschreiben, Daten, welche für Videobilder repräsentativ sind, oder Daten, welche für Audiosignale repräsentativ sind, wobei zumindest einer der charakterisierenden Informationsmerkmale für jeden Informationsposten verwendet wird, einen Merkmalsvektor zu bilden, wobei die Merkmalsvektoren verwendet werden, das selbstorganisierende Verzeichnis (185) zu trainieren, zu dem Effekt, dass ein Merkmalsvektor eines Informationspostens, wenn er einem Eingang (170) des selbstorganisierenden Verzeichnissses (185) zugeführt wird, einen von mehreren Ausgangsknoten (180) identifiziert, wobei die Ausgangsknoten eingerichtet sind, Punkte innerhalb des selbstorganisierenden Verzeichnisses zu identifizieren, wobei das Verfahren umfasst:
Erzeugen eines benutzer-definierten Merkmalsvektors von zumindest einem der charakterisierenden Informationsmerkmale, welche durch einen Benutzer definiert wurden,
Suchen des Satzes an Informationsposten gemäß dem benutzer-definierten charakterisierenden Informationsmerkmal, durch Zuführen des benutzer-definierten Merkmalsvektors dem Eingang des selbstorganisierenden Verzeichnisses, um Informationsposten zu identifizieren, welche charakterisierende Informationsmerkmale haben, welche denen der benutzer-definierten charakterisierenden Informationsmerkmalen entsprechen,
Anzeigen einer Darstellung von zumindest einigen der Informationsposten, welche durch das Suchen identifiziert werden, wobei das Erzeugen des benutzer-definierten Merkmalvektors von den benutzer-definierten Charakteristik-Informationsmerkmalen umfasst:
Auswählen eines Videorahmens in Verbindung mit einem Informationsposten und/oder Audiodaten in Verbindung mit einem Informationsposten, um eine Suchabfrage zu bilden, und
Suchen des Satzes an Informationsposten durch Bilden des benutzer-definierten Merkmalsvektors von der Suchabfrage entsprechend dem ausgewählten Videorahmen und/oder den Audiodaten und durch Zuführen des benutzer-definierten Merkmalsvektors dem selbstorganisierenden Verzeichnis (185), um Informationsposten entsprechend den ausgewählten Videorahmen und/oder den Audiodaten zu identifizieren, wobei das Auswählen des Videobilds, und die Suchabfrage zu bilden, umfasst
Auswählen mehrerer Videobildrahmen von den identifizierten Informationsposten, um die Suchabfrage zu bilden und um eine Suchbeziehung zwischen den ausgewählten Videorahmen gemäß logischen Booleschen Operatoren ODER, UND oder NICHT zu spezifizieren, und der Satz an Informationsposten, der gesucht wird, jeweils einen repräsentativen Schlüsselstempel von Videodaten umfasst, welche gebildet werden, indem mehrere repräsentative Videodaten des Informationspostens identifiziert werden, Bilden eines Farb-Histogramms von jedem der ausgewählten Videorahmen, Kombinieren der Histogramme von jedem der repräsentativen Videorahmen durch Mittelwertbildung der Werte in jeder der Spalten der Histogramme und Normieren der kombinierten Histogramme, um den repräsentativen Schlüsselstempel als das Videorahmenbild auszuwählen, welches ein Farb-Histogramm hat, welches den kleinsten Abstand zum normierten kombinierten Histogramm hat;
wobei, wenn der Boolesche Operator ODER ist, der Suchprozessor betriebsfähig ist, Informationsposten zu identifizieren, welche einen repräsentativen Schlüsselstempel haben, mit dem Farb-Histogramm, welches innerhalb eines vorgegebenen Abstands von jedem der benutzer-ausgewählten Bildrahmen ist, oder, wenn der Boolesche Operator ein UND ist, der Suchprozessor betriebsfähig ist, die Farb-Histogramme für jeden der benutzer-ausgewählten Informationsposten durch Mittelwertbildung der Werte in jeder der Spalten der Histogramme zu kombinieren, und um Informationsposten zu identifizieren, welche einen repräsentativen Schlüsselstempel haben, mit einem Farb-Histogramm, welches innerhalb eines vorgegebenen Abstands von dem kombinierten Farb-Histogramm ist, oder, wenn der Boolesche Operator NICHT ist, der Suchprozessor betriebsfähig ist, Informationsposten, welche einen repräsentativen Schlüssel haben, mit einem Farb-Histogramm auszuschließen, welches innerhalb eines vorgegebenen Abstands des benutzer-ausgewählten Videobildrahmens ist.

4. Verfahren zum Suchen nach Anspruch 3, wobei das Auswählen der Videodaten, um die Suchabfrage zu bilden, umfasst:
Auswählen mehrerer Audiodaten von identifizierten Informationsposten, um eine Suchabfrage zu bilden und um eine Suchbeziehung zwischen den ausgewählten Audiodaten gemäß logischen Booleschen Operatoren ODER, UND oder NICHT zu spezifizieren, und, wenn der Boolesche Operator ein ODER ist, der Suchprozessor betriebsfähig ist, Informationsposten innerhalb einer vorgegebenen Anzahl an Positionen der Ausgangsknoten des selbstorganisierenden Verzeichnisses von jeder Ausgangsknotenposition zu identifizieren, welche durch den benutzer-definierten Merkmalsvektor identifiziert wird, der von den Audiodaten in Verbindung mit dem ausgewählten Informationsposten gebildet wird, oder, wenn der Boolesche Operator ein UND ist, der Suchprozessor betriebsfähig ist, die Audio-Metadaten entsprechend jedem der benutzer-ausgewählten Informationsposten zu kombinieren, und um Informationsposten innerhalb einer vorgegebenen Anzahl an Positionen der Ausgangsknoten des selbstorganisierenden Verzeichnisses (185) von einer Ausgangsknotenposition zu identifizieren, welche durch den benutzer-definierten Merkmalsvektor identifiziert wird, der den kombinierten Audiodaten entspricht, oder, wenn der Boolesche Operator ein NICHT ist, der Suchprozessor betriebsfähig ist, Informationsposten innerhalb einer vorgegebenen Anzahl an Positionen der Ausgangsknoten des selbstorganisierenden Verzeichnisses (185) von einer Ausgangsknotenposition auszuschließen, welche durch den benutzer-definierten Merkmalsvektor in Verbindung mit dem benutzer-ausgewählten Informationsposten identifiziert wird.

5. Informationsabrufvorrichtung nach Anspruch 1 oder 2, welche eine grafische Benutzerschnittstelle (418) aufweist, um die Suchabfrage zum Suchen nach dem Satz an Informationsposten der Informationsabrufvorrichtung zu spezifizieren,
wobei die Informationsposten jeweils einen Satz an charakterisierenden Informationsmerkmalen haben, wobei die Schnittstelle umfasst:
Reihen an Feldern, wobei jedes Feld ein Betriebsmittel bereitstellt, um Informationsposten vom Satz der Informationsposten auszuwählen, wobei jede Reihe einen Suchzustand definiert, um eine Suchabfrage zu bilden, und jede Reihe eine Suchbedingung für eines von den ausgewählten Metadaten, den ausgewählten Videodaten oder den verwandten Audiodaten spezifiziert.

6. Informationsabrufvorrichtung nach Anspruch 5, wobei mehrere Informationsposten für jede Reihe ausgewählt werden können, und, wenn mehr als ein Informationsmerkmal in jeder Reihe bereitgestellt wird, die Bedingungen für die Suchabfrage gemäß benutzer-spezifizierten Booleschen Operatoren kombiniert werden.

7. Informationsabrufvorrichtung nach Anspruch 5 oder 6, wobei die charakterisierenden Informationsmerkmale zumindest eines von Metadaten, Videobildern und Audio-Metadaten sind.

8. Computerprogramm, welches eine Codeeinrichtung umfasst, die eingerichtet ist, alle Schritte der Ansprüche 3 oder 4 durchzuführen, wenn das Programm auf einem Datenverarbeitungssystem abläuft.

9. Computerprogramm nach Anspruch 8, welches bei einem computerlesbaren Medium angewandt wird.

10. Computerprogramm nach Anspruch 9, wobei das Medium ein Speichermedium ist.

11. Computerprogramm nach Anspruch 9, wobei das Medium ein Übertragungsmedium ist.

## Revendications

1. Dispositif de récupération d'informations pour rechercher un ensemble d'éléments d'information et pour afficher les résultats de la recherche en faisant appel à une carte auto-adaptative (185), les éléments d'information présentant chacun un ensemble de caractéristiques d'information de caractérisation, lesquelles incluent au moins l'un des éléments parmi des métadonnées décrivant le contenu ou des attributs de l'élément d'information, des données représentatives des images vidéo ou des données représentatives des signaux audio, au moins l'une des caractéristiques d'information de caractérisation de chaque élément d'information étant utilisée pour former un vecteur de caractéristique, les vecteurs de caractéristique étant utilisés pour former la carte auto-adaptative (185) de sorte qu'un vecteur de caractéristique d'un élément d'information, lorsqu'il est appliqué à une entrée (170) de la carte auto-adaptative (185), identifie l'un parmi une pluralité de noeuds de sortie (180), les noeuds de sortie (180) étant agencés pour identifier des points dans la carte auto-adaptative (185), le dispositif comportant
un processeur de recherche (404) exploitable
pour générer un vecteur de caractéristique défini par un utilisateur, à partir d'au moins l'une des caractéristiques d'information de caractérisation définies par un utilisateur,
pour rechercher l'ensemble d'éléments d'information en appliquant le vecteur de caractéristique défini par un utilisateur à l'entrée de la carte auto-adaptative en vue d'identifier des éléments d'information présentant des caractéristiques d'information de caractérisation correspondant aux caractéristiques d'information de caractérisation définies par un utilisateur,
une interface utilisateur graphique (418) pour afficher une représentation d'au moins certains des éléments d'information identifiés par le processeur de recherche, et
une commande utilisateur (414) délivrant un équipement pour sélectionner une trame vidéo associée à un élément d'information et/ou des données audio associées à un élément d'information pour former une demande de recherche, et le processeur de recherche (404) est exploitable pour rechercher l'ensemble d'éléments d'information en formant le vecteur de caractéristique défini par un utilisateur à partir de la demande de recherche et en appliquant le vecteur de caractéristique défini par un utilisateur à la carte auto-adaptative (185) pour identifier des éléments d'information correspondant à la trame vidéo sélectionnée et/ou aux données audio sélectionnées, dans lequel la commande utilisateur (414) est exploitable pour délivrer, à un utilisateur, un équipement permettant de sélectionner une pluralité de trames d'image vidéo à partir d'éléments d'information identifiés pour former la demande de recherche, et pour spécifier une relation de recherche entre les trames vidéo sélectionnées selon des opérateurs logiques booléens OU, ET ou NON, et les éléments de l'ensemble d'éléments d'information recherché comportent chacun une vignette représentative de données vidéo formées en identifiant une pluralité de trames vidéo représentatives de l'élément d'information, en formant un histogramme de couleurs de chacune des trames vidéo sélectionnées, en combinant les histogrammes de chacune des trames vidéo représentatives en calculant la moyenne des valeurs dans chacune des colonnes des histogrammes et en normalisant les histogrammes combinés en vue de sélectionner la vignette représentative en tant que l'image de trame vidéo présentant un histogramme de couleurs qui présente la plus petite distance jusqu'à un histogramme combiné normalisé ;
dans lequel si l'opérateur booléen est un opérateur booléen OU, alors le processeur de recherche (404) est exploitable pour identifier des éléments d'information présentant une vignette représentative avec un histogramme de couleurs qui se situe à une distance prédéterminée de chacune des trames d'image sélectionnées par un utilisateur, ou, si l'opérateur booléen est un opérateur booléen ET, alors le processeur de recherche (404) est exploitable pour combiner les histogrammes de couleurs de chacun des éléments d'information sélectionnés par un utilisateur en calculant la moyenne des valeurs dans chacune des colonnes des histogrammes, et pour identifier des éléments d'information présentant une vignette représentative avec un histogramme de couleurs qui se situe à une distance prédéterminée de l'histogramme de couleurs combiné, ou, si l'opérateur booléen est un opérateur booléen NON, alors le processeur de recherche est exploitable pour exclure des éléments d'information présentant une vignette représentative avec un histogramme de couleurs qui se situe à une distance prédéterminée de la trame d'image vidéo sélectionnée par un utilisateur.

2. Dispositif de récupération d'informations selon la revendication 1, dans lequel la commande utilisateur (414) est exploitable pour délivrer à un utilisateur un équipement permettant de sélectionner une pluralité de données audio à partir d'éléments d'information identifiés, pour former une demande de recherche et pour spécifier une relation de recherche entre les données audio sélectionnées selon des opérateurs logiques booléens OU, ET ou NON, et si l'opérateur booléen est un opérateur booléen OU, alors le processeur de recherche (404) est exploitable pour identifier des éléments d'information dans un nombre prédéterminé de positions des noeuds de sortie de la carte auto-adaptative (185), à partir de chaque position de noeud de sortie identifiée par le vecteur de caractéristique défini par un utilisateur, formé à partir des données audio associées à chaque élément d'information sélectionné, ou, si l'opérateur booléen est un opérateur booléen ET, alors le processeur de recherche (404) est exploitable pour combiner les métadonnées audio correspondant à chacun des éléments d'information sélectionnés par un utilisateur, et pour identifier des éléments d'information dans un nombre prédéterminé de positions des noeuds de sortie de la carte auto-adaptative (185) d'une position de noeud de sortie identifiée par le vecteur de caractéristique défini par un utilisateur correspondant aux données audio combinées, ou, si l'opérateur booléen est un opérateur booléen NON, alors le processeur de recherche (404) est exploitable pour exclure des éléments d'information dans un nombre prédéterminé de positions des noeuds de sortie de la carte auto-adaptative (185) d'une position de noeud de sortie identifiée par le vecteur de caractéristique défini par un utilisateur associé à l'élément d'information sélectionné par un utilisateur, le processeur de recherche (404) étant exploitable pour rechercher des éléments d'information connexes aux données audio sélectionnées en identifiant des éléments d'information présentant des données audio similaires et/ou identiques.

3. Procédé destiné à rechercher un ensemble d'éléments d'information et à afficher les résultats de la recherche en faisant appel à une carte auto-adaptative (185), les éléments d'information présentant chacun un ensemble de caractéristiques d'information de caractérisation lesquelles incluent au moins l'un des éléments parmi des métadonnées décrivant le contenu ou des attributs de l'élément d'information, des données représentatives des images vidéo ou des données représentatives des signaux audio, au moins l'une des caractéristiques d'information de caractérisation de chaque élément d'information étant utilisée pour former un vecteur de caractéristique, les vecteurs de caractéristique étant utilisés pour former la carte auto-adaptative (185), de sorte qu'un vecteur de caractéristique d'un élément d'information, lorsqu'il est appliqué à une entrée (170) de la carte auto-adaptative (185), identifie l'un parmi une pluralité de noeuds de sortie (180), les noeuds de sortie étant agencés pour identifier des points dans la carte auto-adaptative, le procédé comportant les étapes ci-dessous consistant à
générer un vecteur de caractéristique défini par un utilisateur à partir d'au moins l'une des caractéristiques d'information de caractérisation définies par un utilisateur,
rechercher l'ensemble d'éléments d'information selon la caractéristique d'information de caractérisation définie par un utilisateur en appliquant le vecteur de caractéristique défini par un utilisateur à l'entrée de la carte auto-adaptative en vue d'identifier des éléments d'information présentant des caractéristiques d'information de caractérisation correspondant aux caractéristiques d'information de caractérisation définies par un utilisateur,
afficher une représentation d'au moins certains des éléments d'information identifiés par la recherche, où, l'étape consistant à générer le vecteur de caractéristique défini par un utilisateur à partir des caractéristiques d'information de caractérisation définies par un utilisateur comporte les étapes ci-dessous consistant à
sélectionner une trame vidéo associée à un élément d'information et/ou des données audio associées à un élément d'information, en vue de former une demande de recherche, et
rechercher l'ensemble d'éléments d'information en formant le vecteur de caractéristique défini par un utilisateur à partir de la demande de recherche correspondant à la trame vidéo sélectionnée et/ou aux données audio sélectionnées et en appliquant le vecteur de caractéristique défini par un utilisateur à la carte auto-adaptative (185) pour identifier des éléments d'information correspondant à la trame vidéo sélectionnée et/ou aux données audio sélectionnées, dans lequel l'étape de sélection de l'image vidéo pour former la demande de recherche comporte les étapes ci-dessous consistant à
sélectionner une pluralité de trames d'image vidéo à partir d'éléments d'information identifiés pour former la demande de recherche et pour spécifier une relation de recherche entre les trames vidéo sélectionnées selon des opérateurs logiques booléens OU, ET ou NON, et les éléments de l'ensemble d'éléments d'information recherché comportent chacun une vignette représentative de données vidéo formées en identifiant une pluralité de trames vidéo représentatives de l'élément d'information, en formant un histogramme de couleurs de chacune des trames vidéo sélectionnées, en combinant les histogrammes de chacune des trames vidéo représentatives, en calculant la moyenne des valeurs dans chacune des colonnes des histogrammes et en normalisant les histogrammes combinés en vue de sélectionner la vignette représentative en tant que l'image de trame vidéo présentant un histogramme de couleurs qui présente la plus petite distance jusqu'à un histogramme combiné normalisé ;
dans lequel si l'opérateur booléen est un opérateur booléen OU, alors le processeur de recherche est exploitable pour identifier des éléments d'information présentant une vignette représentative avec un histogramme de couleurs qui se situe à une distance prédéterminée de chacune des trames d'image sélectionnées par un utilisateur, ou, si l'opérateur booléen est un opérateur booléen ET, alors le processeur de recherche est exploitable pour combiner les histogrammes de couleurs de chacun des éléments d'information sélectionnés par un utilisateur en calculant la moyenne des valeurs dans chacune des colonnes des histogrammes, et pour identifier des éléments d'information présentant une vignette représentative avec un histogramme de couleurs qui se situe à une distance prédéterminée de l'histogramme de couleurs combiné, ou, si l'opérateur booléen est un opérateur booléen NON, alors le processeur de recherche est exploitable pour exclure des éléments d'information présentant une vignette représentative avec un histogramme de couleurs qui se situe à une distance prédéterminée de la trame d'image vidéo sélectionnée par un utilisateur.

4. Procédé de recherche selon la revendication 3, dans lequel l'étape de sélection des données audio pour former la demande de recherche comporte les étapes ci-dessous consistant à
sélectionner une pluralité de données audio à partir d'éléments d'information identifiés pour former une demande de recherche et pour spécifier une relation de recherche entre les données audio sélectionnées selon des opérateurs logiques booléens OU, ET ou NON, et si l'opérateur booléen est un opérateur booléen OU, alors le processeur de recherche est exploitable pour identifier des éléments d'information dans un nombre prédéterminé de positions des noeuds de sortie de la carte auto-adaptative à partir de chaque position de noeud de sortie identifiée par le vecteur de caractéristique défini par un utilisateur formé à partir des données audio associées à chaque élément d'information sélectionné, ou, si l'opérateur booléen est un opérateur booléen ET, alors le processeur de recherche est exploitable pour combiner les métadonnées audio correspondant à chacun des éléments d'information sélectionnés par un utilisateur, et pour identifier des éléments d'information dans un nombre prédéterminé de positions des noeuds de sortie de la carte auto-adaptative (185) d'une position de noeud de sortie identifiée par le vecteur de caractéristique défini par un utilisateur correspondant aux données audio combinées, ou, si l'opérateur booléen est un opérateur booléen NON, alors le processeur de recherche est exploitable pour exclure des éléments d'information dans un nombre prédéterminé de positions des noeuds de sortie de la carte auto-adaptative (185), d'une position de noeud de sortie identifiée par le vecteur de caractéristique défini par un utilisateur associé à l'élément d'information sélectionné par un utilisateur.

5. Dispositif de récupération d'informations selon la revendication 1 ou 2 comportant une interface utilisateur graphique (418) permettant de spécifier la demande de recherche en vue de rechercher l'ensemble d'éléments d'information du dispositif de récupération d'information, les éléments d'information présentant chacun un ensemble de caractéristiques d'information de caractérisation, l'interface comportant
des lignes de champs, chaque champs délivrant un équipement permettant de sélectionner des éléments d'information à partir de l'ensemble d'éléments d'information, chaque ligne définissant une condition de recherche pour former une demande de recherche, et chaque ligne spécifiant une condition de recherche pour l'un des éléments parmi des métadonnées sélectionnées, des données vidéo sélectionnées ou des données audio connexes.

6. Dispositif de récupération d'informations selon la revendication 5, dans lequel une pluralité d'éléments d'information peut être sélectionnée pour chaque ligne, et lorsque plus d'une caractéristique d'information est délivrée dans chaque ligne, alors les conditions de la demande de recherche sont combinées selon des opérateurs booléens spécifiés par un utilisateur.

7. Dispositif de récupération d'informations selon la revendication 5 ou 6, dans lequel les caractéristiques d'information de caractérisation représentent au moins l'un des éléments parmi des métadonnées, des images vidéo et des métadonnées audio.

8. Programme informatique comportant des moyens de code aptes à mettre en oeuvre la totalité des étapes selon la revendication 3 ou 4, lorsque ledit programme est exécuté sur un système de traitement de données.

9. Programme informatique selon la revendication 8, intégré dans un support lisible par un ordinateur.

10. Programme informatique selon la revendication 9, dans lequel le support est un support de stockage.

11. Programme informatique selon la revendication 9, dans lequel le support est un support de transmission.
